# EUROPEAN PATENT APPLICATION

(11) **EP 4 524 061 A1**
(43) Date of publication of application: **19.03.2025**
(21) Application number: 23205457.7
(22) Date of filing: 24.10.2023
(51) Int. Cl.: B65G 1/04, B65G 1/137, B66F 9/06, B65G 47/90

(54) **A MOBILE AUTOMATED CONTAINER HANDLING DEVICE AND METHOD**

(30) Priority: 18.09.2023 HK 22023079288
(71) Applicant: Shoalter Automation Limited, Kwai Chung, New Territories (HK)
(72) Inventor: WONG, Wai Kay, Kwai Chung, New Territories (CN); LAU, Chi Kong, Kwai Chung, New Territories (CN); WONG, Wai Kin, Kwai Chung, New Territories (CN); CHEUNG, Clement Chek Bong, Kwai Chung, New Territories (CN)
(74) Representative: Bird & Bird LLP - Hamburg

(57) **Abstract**

A mobile automated container handling device and a method for handling a stack of a plurality of storage containers are disclosed. The device comprises a main body defining a cavity for locating a vertical stack of a plurality of storage containers therein, the main body comprises a primary support for supporting a stack of a plurality of storage containers thereon inside the cavity; a container handling arrangement is positioned in the cavity and comprises a drive unit and engagement means, the drive unit being configured to move the engagement means within the cavity and the engagement means being configurable to engage at least one storage container of a stack of a plurality of storage containers; a secondary support configurable between an active and a passive configuration and a drive arrangement for moving the main body relative to a support surface on which the mobile automated container handling device is located

## Description

### FIELD

The present invention relates to a mobile automated container handling device and a method for handling a stack of a plurality of storage containers.

### BACKGROUND

In modern society, the retail industry plays an important role in providing a link between consumers and various industries that, either directly or indirectly, rely on revenue generated by consumer purchases.

Traditionally, the retail industry has relied on consumers entering a shop and physically selecting and purchasing a desired product. In more recent years, rapid development of e-commerce has led to the possibility of online shopping, whereby it is possible to purchase products online, and either have them delivered to a home address, or have them prepared and held in a store for pickup by the consumer.

While these recent developments to e-commerce have undoubtedly made the shopping experience easier and less time consuming for the consumer, they have driven the need to provide an additional service within the retail industry whereby goods are located and packed for a consumer. In earlier days of e-commerce, this service was mainly provided by workers tasked with locating and grouping purchased products (e.g. in a shop or warehouse), which would then be packaged as appropriate for receipt by the consumer. Over time, this system has been automated to various degrees.

One form of automation involves the management of inventory (e.g. in a shop or warehouse) by automated means, such as via a computer system, which is then able to track the volume and location of inventory. This inventory management automation may assist workers in finding purchased products without having to expend effort searching for said products, and may additionally perform other functions such as alerting workers of the need to restock their inventory.

While this system may reduce the time required to locate and group purchased products, it still requires workers to physically locate and group products, as well as to ensure that the real-life inventory is an accurate reflection of that of the automated management system.

The system is therefore prone to human error, and also limited to the physical capabilities of a human worker (e.g. speed, height, strength, etc.). Further, in recent times, there is a desire to reduce human interaction with purchased goods to avoid potential contamination of the goods (e.g. during the time of the global COVID-19 pandemic), which is also not possible using this system.

One way to address these problems is to provide a system in which as many steps as possible are automated, for example so that a human worker is simply provided with a set of pre-grouped products that have been purchased by a consumer, where the products have been selected and grouped by automated means. An example of such a system is the Hive system provided by Ocado Technology. This system comprises a warehouse in which products are stored in a grid of bins accessible by robots operating on rails, such that the robots are able to locate and retrieve items that have been purchased by a consumer within the grid. While such a system may remove at least some of the human element relating to inventory management and physical location of an item in a warehouse, it may come with relatively high initial investment, since it is not applicable to an existing warehouse, and requires a warehouse to be modified, e.g. by the inclusion of rails, so that robots are able to perform their functions.

To avoid having to completely redesign shops and warehouses, some systems have been developed that involve automation that can be integrated into existing shops and warehouses. For example, some robots have been developed that are able to be installed next to existing storage units (e.g. shelving units) and that are able to sort items that have been picked from a storage unit. Further still, some systems have been developed involving robots that are able to be driven around existing shops and warehouses to pick items from storage units. However, these systems generally involve robots that are bulky and require a lot of space, especially when mounted with an item picked from storage, or with items to be sorted, that may be held in front, or to the side, of the robot. The robots may also have limited functionality, meaning that they may not be suitable for some existing warehouses, for example due to the height of the shelves, or due to the available space in the warehouse.

The present invention aims to address one or more of the above problems.

### SUMMARY OF THE INVENTION

According to one aspect of the present invention, there is provided a mobile automated container handling device, comprising:
a main body defining a cavity for locating a vertical stack of a plurality of storage containers therein, the main body comprising a primary support for supporting a stack of a plurality of storage containers thereon inside the cavity;
a container handling arrangement positioned in the cavity and comprising a drive unit and engagement means, the drive unit being configured to move the engagement means within the cavity and the engagement means being configurable to engage at least one storage container of a stack of a plurality of storage containers;
a secondary support configurable between an active and a passive configuration; and
a drive arrangement for moving the main body relative to a support surface on which the mobile automated container handling device is located;
wherein the container handling arrangement is configurable to engage, via the engagement means, at least one storage container of a stack of storage containers supported by the primary support and move the engagement means and the engaged at least one storage container to a holding position; and
wherein the secondary support is configurable to the active configuration to engage a storage container of the at least one storage container engaged by the engagement means in the holding position, and configurable to the passive configuration in which the secondary support is disengaged from the at least one storage container.

In use, container handling arrangement may be configurable to engage and move one or a vertical stack of a plurality of storage containers to the holding position so as to be engaged by the secondary support, thus freeing the container handling arrangement for handling of a further container or vertical stack thereof and greatly increasing the operational and carrying capacity of the device.

In some examples the engagement means may be configurable to engage at least two storage containers of a stack of a plurality of storage containers located inside the cavity, and the secondary support may be configurable to the active configuration to engage a storage container of the at least two storage containers engaged by the engagement means in the holding position, such that the engagement means may be in contact with a first of the at least two storage containers, and the secondary support may be in contact with a second of the at least two containers.

In some examples, the secondary support may engage a storage container of the at least two storage containers engaged by the engagement means in the holding position such that the engagement means may be in contact with a first of the at least two storage containers, and the secondary support may be in contact with a second of the at least two containers.

In some examples, the second of the at least two containers may be positioned directly upon the first of the at least two containers.

In some examples, the primary support may be fixed relative to the main body.

In some examples, the main body may define a through-passage for permitting passage of a storage container therethrough, and the container handling arrangement may be configurable to move an engaged stack of a plurality of storage containers between:
a lowered position in which the stack of a plurality of storage containers may be supported by the support and positioned in the through-passage such that passage of a storage container through the through-passage may be prevented; and
a raised position in which the stack of a plurality of storage containers may be moved from the support so as to permit passage of a storage container through the through-passage.

The through passage may be suitable for permitting passage of a container therethrough in addition to a device supporting or carrying the container. For example and as will be described in the following paragraphs, a container may be carried by a secondary device, e.g. for the purpose of transporting a storage container around a warehouse. The through-passage may be suitable for permitting passage of a vertical stack of a plurality of containers supported on a secondary device therethrough.

In some examples the main body may comprise an outer housing and a guide arrangement extending parallel to a longitudinal axis of the outer housing, and the container handling arrangement may be mounted to the guide arrangement to permit movement of the engagement means through a first range of motion that may be parallel to the longitudinal axis of the outer housing and contained within the outer housing.

In some examples, both the raised and the lowered position may be contained within the first range of motion.

In some examples, the guide arrangement may extend external to the cavity and the drive unit may be configured to move the engagement means through a second range of motion that extends external to the cavity.

In some examples, the guide arrangement may comprise a telescopic portion configurable to extend a length of the guide arrangement and to extend the second range of motion.

In some examples, the primary support may comprise a base-plate and a first and second ramp, and the first ramp may permit passage (e.g. placement) of a container onto the base plate and into the through-passage and the second ramp may permit passage of a container from the base plate and out of the through-passage.

In some examples, the through-passage may permit the passage of a vertical stack of a plurality of storage containers therethrough.

In some examples, the engagement means may be configurable to move in a first longitudinal direction and a second longitudinal direction relative to the main body, the second longitudinal direction may be opposite the first longitudinal direction, and the engagement means may be additionally configurable to move in a first lateral direction, the first lateral direction extending laterally relative to the first and second longitudinal directions, and a second lateral direction, the second lateral direction being opposite the first lateral direction.

In some examples, the engagement means may comprise an extendable arm, moveable in the first and second lateral directions and extendable external to the cavity. Having such an extendable arm may permit the engagement means to be used to actively reach out and engage a container, as opposed to having to slide the container into the engagement means, thus improving the operational capabilities of the device.

In some examples, the engagement means may comprise a container contactor configurable between an extended position in which the contactor is configurable to engage a surface of a storage container and a retracted position in which the contactor is disposed at a distance from said surface of a storage container.

In some examples, the container handling arrangement may comprise a sensor arrangement.

In some examples the sensor arrangement may be configured to detect container-content information, and the container handling arrangement may further comprise a retrieval device for retrieving an item from within a storage container, the item being identifiable from the container-content information.

In some examples, the retrieval device may comprise an item picker mounted to a telescopic arm.

In some examples, telescopic arm and the item picker mounted thereto may be extendable outside of the cavity.

In some examples, the sensor arrangement may comprise an optical sensor configured to detect container-content information.

In some examples, the sensor arrangement may be configured to identify a location of an individual storage container from a vertical stack of a plurality of storage containers.

In some examples, the handling device may comprise a processing unit for controlling the container handling arrangement and the configuration of the secondary support.

According to another aspect, there is provided a method for handling a stack of a plurality of storage containers, comprising:
supporting a vertical stack of a plurality of storage containers on a primary support and inside a cavity of a main body of an automated container handling device;
positioning a container handling arrangement in the cavity, the container handling arrangement comprising an engagement means and a drive unit;
engaging at least one storage container of the stack of a plurality of storage containers supported on the primary support with the engagement means;
operating the drive unit to move the engagement means and the at least one engaged storage container to a holding position;
configuring a secondary support from a passive configuration to an active configuration to engage a storage container of the at least one engaged storage container in the holding position.

In some examples, the method may comprise:
engaging at least two storage containers of the stack of plurality of storage containers supported on the primary support with the engagement means;
operating the drive unit to move the engagement means and the at least two engaged storage containers to a holding position;
configuring the secondary support from a passive configuration to an active configuration;
engaging a storage container of the at least two storage containers with the secondary support by configuring the secondary support from the passive configuration to the active configuration such that the engagement means is in contact with a first of the at least two storage containers and the secondary support is in contact with a second of the at least two storage containers.

In some examples, the method may comprise moving the engagement means in a first longitudinal direction to the holding position, and in a second longitudinal direction subsequent to configuring the secondary support to the active configuration, the second longitudinal direction being opposite the first longitudinal direction.

In some examples, the method may comprise moving the engagement means in the second longitudinal direction subsequent to configuring the secondary support to the active configuration to separate the storage container in contact with the secondary support from the storage container in contact with the engagement means.

In some examples, the method may comprise engaging the uppermost container of the stack of a plurality of storage containers with the engagement means,
operating the drive unit to move the engagement means and the engaged uppermost container in a first lateral direction to a location external to the cavity, the first lateral direction extending laterally relative to the first longitudinal direction;
operating the drive unit to move the engagement means in the second longitudinal direction to position the uppermost container in a storage location external to the cavity;
disengaging the engagement means from the uppermost container; and
operating the drive unit to move the engagement means in a second lateral direction and into the cavity, the second lateral direction being opposite the first lateral direction.

In some examples, the method may comprise engaging, with the engagement means, the plurality of storage containers positioned directly upon the lowermost storage container of the vertical stack;
operating the drive unit to move the engagement means and the engaged plurality of storage containers in a first lateral direction to a location external to the cavity, the first lateral direction extending laterally relative to the first longitudinal direction;
operating the drive unit to move the engagement means in a second longitudinal direction, the second direction being opposite the first longitudinal direction, to position the engaged plurality of storage containers in a first storage location external to the cavity;
disengaging the engagement means from the engaged plurality of storage containers;
operating the drive unit to move the engagement means in a second lateral direction into the cavity, the second lateral direction being opposite the first lateral direction.

In some examples, the method may comprise:
engaging, with the engagement means, the lowermost storage container;
operating the drive unit to move the engagement means in the first lateral direction to a location external to the cavity to position the lowermost storage container in a second storage location;
disengaging the engagement means from the lowermost storage container;
engaging, with the engagement means, the plurality of storage containers;
operating the drive unit to move the engagement means and engaged plurality of storage containers in the second lateral direction into the cavity;
positioning the plurality of storage containers on the primary support.

In some examples, the storage location may be an engagement means of an automated container handling device, or a support surface of a secondary container handling device (e.g. a secondary device).

In some examples, the method may comprise engaging, with the engagement means, the vertical stack of storage containers positioned on the primary support;
operating the drive unit to move the engagement means and the engaged vertical stack of storage containers to a raised position in which passage of a storage container through a through-passage in the main body is permitted;
passing a storage container through the through-passage in the main body.

In some examples, the method may comprise providing a guide arrangement mounted to an outer housing of the main body and extending parallel to a longitudinal axis of the outer housing;
mounting the container handling arrangement to the guide arrangement;
operating the drive unit to move the engagement means through a first range of motion parallel to the longitudinal axis and contained within the outer housing.

In some examples, the method may comprise telescopically extending a length of the guide arrangement external to the cavity to provide a second range of motion extending external to the cavity.

In some examples, the method may comprise providing the engagement means with a container contactor;
configuring the container contactor from a retracted position to an extended position in which the contactor is configurable to engage a surface of a storage container;
engaging the container contactor with the uppermost storage container in the vertical stack of storage containers so as to stabilise the vertical stack of storage containers.

The invention provides a device and method that may be used in a storage location (e.g. a shop or a warehouse), which may be an existing storage location (e.g. a storage location that may not have been specifically designed for use with the device in mind, and/or in which human workers may have previously been present to perform the role of the device), due to its compact build and facilitated by its lightweight structure, and which therefore may have a lower investment cost as compared to other devices designed to pick and sort inventory within such a storage location. For example, the compact design of the device may facilitate use of the device in relatively narrow corridors or aisles of an existing warehouse, without the need to redesign (e.g. widen) existing infrastructure. The device further provides a number of features, such as picking and sorting of inventory independently e.g. using one apparatus (here, the container handling arrangement) without necessarily having to have any interactions with other devices, workers or machinery, (e.g. for placement, packing and/or picking operations) and therefore has the capability to operate with a reduced reliance on workers or other devices or machines for operation. The device also having the capability to communicate/collaborate with other devices and/or secondary devices may permit the device, or a plurality of devices and optionally a secondary device or devices, each of which having the capability to support a plurality of storage containers may permit the device (or devices) to be used in a store, warehouse, or the like, that may require the handling of a large volume of containers, without requiring a complex set-up process to render the store or warehouse usable with the device or devices.

Further, the ability of the device to be used in a storage location which may not be specifically designed for its use, and/or which may be an existing storage location, may significantly reduce the investment cost.

### BRIEF DESCRIPTION OF THE DRAWINGS

Figures 1 to 3 provide perspective views of a mobile automated container handling device.
Figures 4 and 4A are perspective views of the handling device and a housing, showing the housing removed from the handling device.
Figure 5 is an exploded perspective view of modules of a handling device.
Figures 6 and 7 are perspective views of an engagement means.
Figures 8A-C is an exploded perspective view of an engagement means.
Figure 9 illustrates steps in a method of handling a stack of containers.
Figure 10 shows a handling device engaging a stack of storage containers.
Figure 11 shows cooperation between a handling device and a secondary device.
Figure 12 shows a handling device engaging a storage container at a storage location.
Figure 13 illustrates cooperation between a handling device and a secondary device.

### DETAILED DESCRIPTION OF THE DRAWINGS

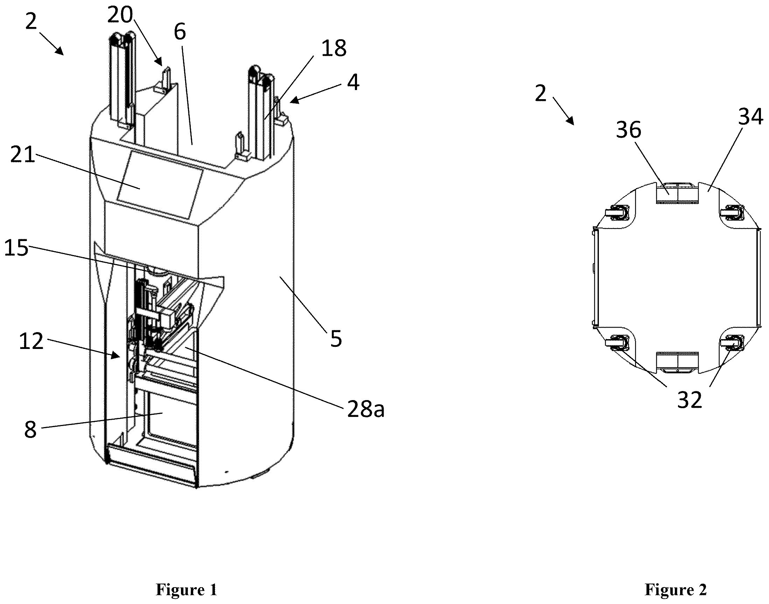

Figures 1-3 are perspective views of an example of the mobile automated container handling device 2. The handling device 2 comprises a main body 4, which defines a cavity 6 therein. The main body 4 may additionally comprise a housing 5, or may be integrally formed with a housing 5. In the illustration of Figures 1-3, the main body comprises a housing 5 which may be removable from the main body 4, and may be removable from the body as one piece, or may comprise a plurality of sections.

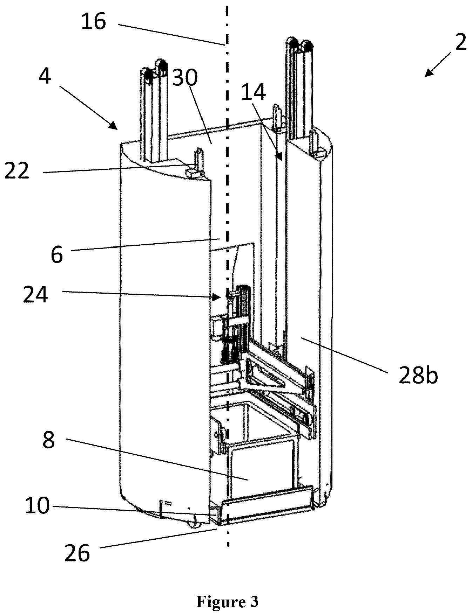

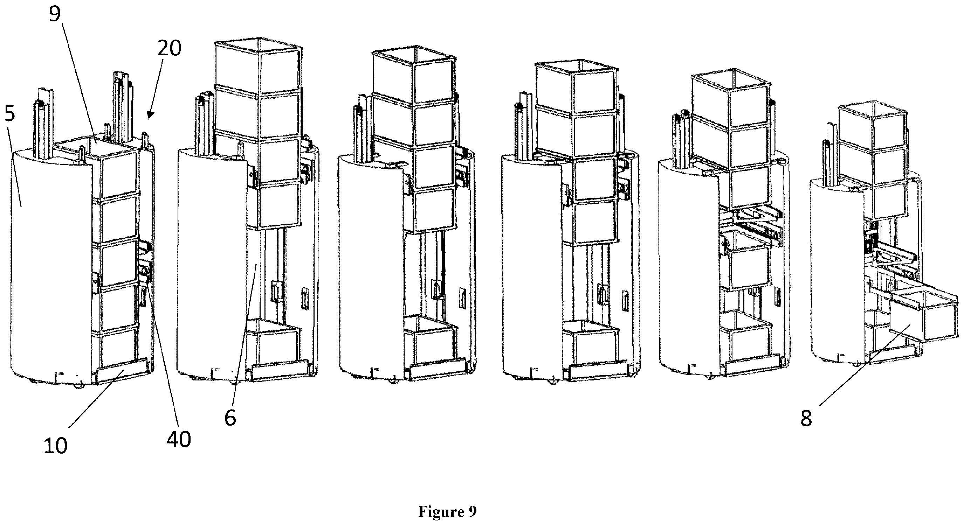

The cavity 6 is suitable for locating a vertical stack of a plurality (e.g. two, three, four, or the like) of storage containers therein (as will be described in relation to Figure 9, for example), although in Figures 1 and 3 only a single storage container 8 is illustrated in the cavity 6. The main body 4 additionally comprises a primary support 10 for supporting a plurality of storage containers thereon. The support may take any appropriate form. In the illustration of Figures 1 and 3, the primary support 10 is in the form of a plate (e.g. a base plate) on which a storage container or a stack of storage containers may be supported. Alternatively, the primary support 10 may be in the form of a protrusion or a set of a plurality of protrusions which are connected to (e.g. attached to, anchored to, formed with) the main body 4 so as to support a plurality of storage containers thereon. In some examples, the primary support 10 may be in the form of a finger or plurality of fingers, a lip, a ledge, a rib or the like, or a plurality thereof, which may protrude into, or towards the centre of, the cavity 6.

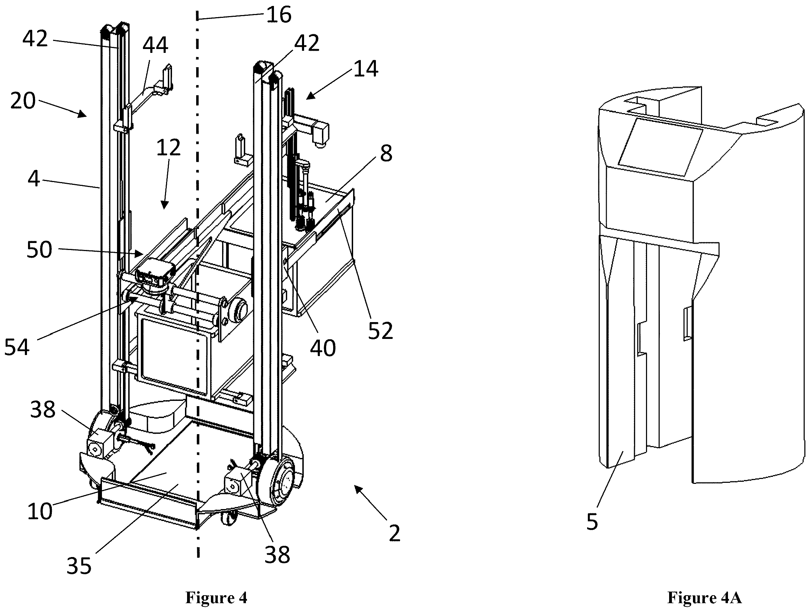

Also positioned inside the cavity 6 is a container handling arrangement 12. The container handling arrangement 12 comprises a drive unit and engagement means (see Figure 4, for example). The drive unit is configured to move the engagement means within the cavity 6, while the engagement means is configurable to engage at least one storage container of a stack of a plurality of storage containers, which may be located in the cavity 6, or which may be located external to the cavity.

In this example, the container handling arrangement 12 is mounted to a guide arrangement 14. The guide arrangement 14 extends parallel to a longitudinal axis 16 of the main body 4, and in this case also to the housing 5 of the main body 4. Here, the guide arrangement 14 comprises or is in the form of a plurality of rails 18 which are attached (e.g. mounted to) the main body 4. However, it should also be understood that the guide arrangement 14, or at least part of the guide arrangement 14, may be integrally formed with the main body 4, for example may be integrally formed with a part of the main body 4 such as the housing 5 thereof.

Mounted to the main body 4 is a secondary support 20. The secondary support 20 may be mounted to, or positioned on or adjacent, an uppermost surface of the main body 4. Here, the secondary support 20 is in the form of a plurality of fingers, although other forms of secondary support are also conceivable, such as a protrusion, lip, rib, or a plurality thereof. As illustrated, the secondary support 20 comprises a plurality of support members 22 - four are illustrated, although it should be noted that a different number of support members may be present, for example four or more such as five, six, seven, eight or the like. The secondary support 20 is configurable between an active and passive configuration. Shown in Figures 1 and 3, the secondary support 20 is in the passive configuration, while the secondary support 20 in the active configuration will be described in relation to the following Figures (see Figure 9, for example). In the active configuration, the secondary support is configured to engage a storage container, in particular a storage container that is one of the storage containers of a vertical stack engaged by the engagement means. The secondary support 20 may therefore engage a storage container 8, while optionally supporting a stack of storage containers thereon. In the passive configuration, the secondary support 20 is configured to be disengaged from a storage container, and may permit a storage container, or a stack of storage containers engaged by the engagement means, to pass without engaging therewith, for example to pass in a direction parallel to the longitudinal axis 16.

In this example, the secondary support 20 (and in particular the support members 22 of the secondary support) are configured to rotate between the active and passive configuration. The support members 22 may be able to rotate (e.g. by an angle between 80 and 100 degrees, such as 90 degrees) between the active and the passive configuration. Rotation of the support members 22 is about an axis that is perpendicular to longitudinal axis 16, although in other examples rotation may be about another axis, such as an axis that runs parallel to the longitudinal axis 16. Here, the support members 22 in the active configuration are parallel to the surface on which the handling device 2 is located when in the active configuration, thus providing a flat and stable support on which a container 8 may be held, while in the passive configuration, the support members 22 are oriented perpendicular to the surface on which the handling device 2 is located. Other examples of secondary support 20 and/or support members 22 may be possible, such as a secondary support 20 having support members 22 that slide, extend, or the like between the active and the passive configuration. In such an example, the secondary support may protrude from a housing when in the active configuration, and may be withdrawn into the housing in the passive configuration.

In the active configuration, the secondary support 20 may protrude into (e.g. be at least partially located in) the cavity 6, while in the passive configuration the secondary support 20 may be located external to the cavity 6 (e.g. fully external to the cavity 6).

The presence of the secondary support 20 may remove the requirement for the handling device 2 to comprise shelves, or a shelving unit, in which to store and/or carry a plurality of additional storage containers, having the effect of reducing the overall weight of the handling device 2, thereby improving its manoeuvrability both in use and when transporting the handling device 2. It may also increase the number of storage containers that the device 2 can carry, as alternative devices comprising shelving units may be limited by the size and weight of said shelving unit.

The housing 5 of the handling device 2 may have a generally cylindrical form, as is the case here. However, the handling device 2 may take any other appropriate shape such as an extruded square or rectangular form. The housing 5 comprises a number of openings therein. A lower opening 26 in the housing 5 may permit the main body 4 to extend into the housing 5, and may facilitate placement of the housing 5 on the main body 4. The housing 5 additionally comprises two side openings 28a, 28b. The side opening 28a, which may be considered to be on/aligned with a front section of the device 5 extends the partial length of the housing 5, while the side opening 28b, which may be considered to be on/aligned with a rear section of the device 5, extends the full length of the housing 5. Here, the front opening 28a is laterally oppositely disposed as compared to the rear opening 28b. Having the rear side opening 28b extending the full length of the housing 5 may facilitate lifting of containers positioned within the cavity 6 of the main body 4, as well as the transfer of containers into and out of the cavity 6 by allowing this to be achieved at any height without the housing 5 providing an obstruction. An upper opening 30 in the housing 5 may permit the main body 4 (e.g. a part or part thereof) to extend out of the housing 5, which may assist to permit operations to occur at a height that is greater than the height of the housing 5.

From a comparison of Figures 1 and 3, it can be seen that the main body 4, and the housing 5 thereof, define a through-passage 24. The through-passage 24 is defined by the front and back side openings 28a, 28b and the cavity 6 in the main body 4, and extends through the main body 4 and the housing 5 in a direction lateral to the longitudinal axis 16 thereof.

The handling device 2 comprises an orientation sensor 15, or plurality of sensors, which may be used to assist the handling device 2 in identifying its surroundings. The orientation sensor 15 or sensors may be or comprise any appropriate sensor, for example one or a plurality of optical sensors, such as one or a plurality of cameras. The orientation sensor 15 or sensors may assist or facilitate the use of LiDAR (e.g. 2D or 3D LiDAR). The orientation sensor 15 or sensors may therefore additionally comprise a laser or lasers in addition to a sensor (e.g. an optical sensor) or sensors. For example, the orientation sensor 15 may be used to identify the presence of nearby objects (e.g. shelving units, shop counters, nearby people, other handling devices, or the like), thus assisting the handling device 2 with navigation in a location such as a shop or a warehouse, which may be updated in real-time and/or independent of external input (e.g. human intervention) such that handling device 2 is able to quickly adapt to changing surroundings. The orientation sensor 15 may additionally be used to identify other handling devices 2, or similar such devices, that are in the vicinity for the purpose of collaboration between the devices, e.g. passing storage containers from one device to another. The orientation sensor may be able to scan its local surroundings and identify objects based on their appearance, and avoid said objects. The handling device 2 may be able to be used, e.g. in a shop or warehouse, without the need for specialised markings to be identified by the orientation sensor (e.g. via communication with a processor).

The handling device 2 additionally comprises a user interface 21. The user interface 21 may permit a user to reconfigure a setting or settings of the handling device 2. The user interface 21 may assist when calibrating the handling device 2, for example calibrating the handling device 2 to engage a storage container 8 of specific dimensions, or calibrating the handling device 2 to be used in a shop or warehouse with a specific layout, or in which there are areas or zones in which the handling device 2 should not operate, for example. In addition, the user interface 21 may assist to control the handling device 2 during maintenance operations thereon. For example, where it is needed to move the container handling arrangement 12 to a certain position or configuration to allow ease of access, this may be accomplished through use of the user interface 21. Similarly, if an error has occurred in the operation of the handling device 2, this may be resolved and/or prevented in future through use of the user interface 21. The user interface may be or comprise a touch screen or regular screen, an array of buttons and/or switches, an array of LEDs or lightbulbs, or the like.

In Figure 2, the underside of the handling device 2 is illustrated. Here, a plurality of stabiliser wheels 32 are illustrated which may be used to facilitate moving of the main body relative to a support surface on which the handling device 2 is located and may provide stability to the device 2, both when in motion and when stationary. Although four stabiliser wheels are illustrated, it should be noted that any appropriate number of stabiliser wheels may be used, for example two, three, five, six or the like. The stabiliser wheels 32 are in the form of a square array, although other arrangements of stabiliser wheels 32 on the base may be possible. The stabiliser wheels 32 are connected (e.g. mounted, anchored, or the like) to a base 34 which is in the form of a base plate, although in other examples may be in the form of a frame, bar or plurality of connected bars, or other appropriate structure. The stabiliser wheels 32 may be mounted to the base 34 so as to restrict (e.g. prevent) translational movement of the stabiliser wheels 32 relative to the base 34, but permit rotational movement of the stabiliser wheels 32 relative to the base 34, for example rotational movement about an axis parallel to the longitudinal axis 16 may be permitted. Additionally illustrated are two drive wheels 36. Each of the drive wheels 36 are located on a side of the main body 4, and are oppositely disposed on the main body 4. In this example, the drive wheels 36 are located on an outer edge of the main body 4, and are contained within the housing 5. In contrast to the stabiliser wheels 32 which are mounted to the base 34, the drive wheels 36 are mounted to a drive arrangement which may be itself mounted to the main body 4. The drive wheels 36 may be independently operable so as to additionally provide a steering function for the handling device 2, and may provide the handling device 2 with an omnidirectional function, meaning that the wheels can be used to fully rotate the handling device 2 about its centre - the handling device may therefore be omnidirectional. The wheels 32 are in communication with said drive arrangement configured to drive the wheels, thereby permitting the handling device to drive itself relative to a support surface on which it is located, for example the floor of a warehouse or shop. Although stabiliser wheels 32 and drive wheels 36 are illustrated in Figure 2, it should be noted that the device is not limited to the use of wheels, and the handling device 2 may instead comprise cylindrical rollers, spherical rollers, or any other appropriate stabiliser and/or drive device.

Although not illustrated, the device 2 (e.g. the main body 4) may comprise a suspension arrangement which may comprise active and/or passive suspension. The suspension arrangement may improve the stability of the handling device 2, and may additionally facilitate more rapid acceleration and deceleration, avoiding the risk of the device falling over, and/or containers that are supported by the device (e.g. by the primary support 10 or secondary support 20) from falling from or shifting in the cavity 6.

In this example, the base 34 additionally defines the primary support 10 and provides a base plate (e.g. a flat surface) which may form the primary support 10. However, in other examples, such as where the base 34 is in the form of a frame, the primary support 10 may be formed by a protrusion, rib, lip or the like, or a plurality thereof.

Figures 4 and 4A illustrate the handling device 2 in more detail, with the housing 5 removed from the main body 4 to show further detail thereof. Here, the container handling arrangement 12 is shown mounted to the guide arrangement 14, where the guide arrangement 14 extends parallel to the longitudinal axis 16, shown in this example in relation to the main body 4, since the housing 5 is illustrated as being separated from the main body 4. The container handling arrangement 12 comprises a drive unit 38, which may be used to move an engagement means 40, for example in a first and second longitudinal direction which may correspond to an upwards and a downwards direction, respectively, when the device 2 is oriented for normal operation. In this example, the guide arrangement 14 comprises two guide rails 42 that extend in the longitudinal direction parallel to the longitudinal axis 16, and are connected (e.g. anchored, mounted, or the like) to the base 34 of the main body 4. The guide rails 42 are connected to the base 34 on opposite sides thereof. The engagement means 40 of the container handling arrangement 12 is located between each of the guide rails 42, and is in engagement with each of the guide rails 42. Engagement between engagement means 40 and the guide rails 42 may permit the engagement means 40 to move in a first direction parallel to the longitudinal axis 16, and a second direction, also parallel to the longitudinal axis 16 and opposite to the first direction. The engagement between the engagement means 40 and the guide rails 42 may be or comprise, for example, a hoist mechanism which may comprise a chain, cable, tether or the like, and at least one lift-wheel. In such an arrangement, the guide rails 42 may comprise a lift-wheel and a cable, chain, tether or the like, to which the engagement means 40 is attached. Operation of the drive unit 38 may then turn the lift-wheel so as to raise or lower the engagement means 40 as appropriate. Alternatively, the guide rails 42 may comprise a different means by which to raise and lower the engagement means 40. For example, the guide rails 42 may comprise a pneumatic extension/lifting mechanism comprising an elongate member (e.g. a rod, pole or the like) that may be extended or retracted to raise and lower the engagement means 40. The container handling arrangement 12 may comprise one drive unit 38 per guide rail 42, thus in this example the container handling arrangement 12 may comprise two drive units 38.

Visible on the base 34 in Figure 4 is a recessed portion 35. The recessed portion is provided, in this example, on the primary support 10, and may have the approximate length and width of a storage container 8 that is intended to be used with the handling device 2. Here, the recessed portion 35 is rectangular in shape, and may therefore be used with storage containers having a rectangular cross section. Other shapes of recessed portion 35 may be possible, such as a circular, oval, pentagonal, polygonal shape, or the like. The recessed portion may act as a guide, and may encourage storage containers positioned on the primary support 10 to move towards the centre of the support 10, and/or keep storage containers 8 centred on the primary support 10, for example by assisting to prevent sliding of a storage container 8 on the primary support 10 during movement of the handing device 2.

The engagement means 40 is moveable in a first direction and a second direction, the first direction opposite the second direction, and both the first and second directions being parallel to the longitudinal axis 16. The engagement means 40 may be moveable in the first and second direction between an upper and a lower end point, and may be moveable with or without a storage container or a stack of storage containers engaged therein. The upper and lower end points may be defined by length of the guide arrangement 14, for example by the ends of the guide rails 18 of the guide arrangement 14. In Figure 4, the engagement means 40 is illustrated at a midpoint (i.e. between the upper and lower end points). The engagement means 40 may be configurable to engage a storage container 8, and move the container in the first and/or second direction between the upper and the lower end points, for example to lift the container 8 to the height of a shelf (e.g. positioned next to the handling device 2), to lower the container onto the primary support 10, or the like.

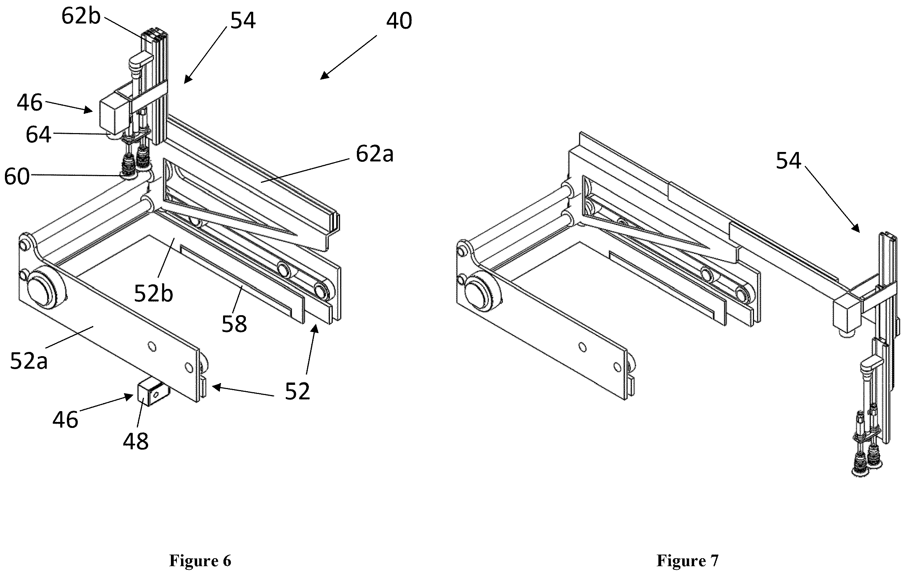

To facilitate use of the engagement means 40 to engage a storage container 8, the container handling arrangement 12 may comprise a sensor arrangement 46 (see Figure 6, for example). The sensor arrangement 46 may comprise one or a plurality of sensors. For example, the sensor arrangement 46 may comprise a location sensor 48 for locating the position of a storage container 8 e.g. relative to the engagement means 40. The sensor arrangement 46 may be in communication with a control unit (not shown). The control unit (e.g. a processing unit) may comprise a processor, and may receive data from the sensor arrangement 46, for example to identify a storage container 8 sensed by the sensor arrangement 46, for example the location sensor 48 thereof. In some examples, the location sensor 48 may be an optical sensor which may be able to "see" a storage container 8. The, or each, storage container 8 (for example of a vertical stack of a plurality of storage containers) may comprise an identifier to assist the location sensor 48 to identify the storage container 8 as such. For example, a storage container 8 may comprise a bar code, QR code, RFID tag, or the like which may be readable by the location sensor 48 to identify the container 8. The identifier may be used to provide container-content information of a storage container which may comprise, for example, the number and/or type of objects in a storage container. In other examples, the location sensor 48 may be or comprise another type of sensor, such as magnetometer. In such an example, the storage container 8 may comprise a corresponding magnetic signature which is able to be read by the location sensor 48 to identify the storage container 8. The location sensor 48 may be located on, or attached to (e.g. mounted to) the engagement means 40 (e.g. a frame of the engagement means 40), such that movement of the engagement means 40 may effect corresponding movement of the location sensor 48.

In this example, the location sensor 48 may be used to identify the location of a storage container 8 by sensing (e.g. reading) an identifier of a storage container 8 and providing this data to a processor, which may correlate this data with the known position of the engagement means 40 (e.g. a point between the upper and lower end points between which the engagement means 40 is moveable) to provide a position of the identified storage container 8. The identifier may provide information that identifies the storage container 8, as well as further information, for example relating to the contents (e.g. is the container full or empty, or details of the specific items in the storage container) and/or dimensions of the storage container. The location sensor 48 may also be used to identify storage containers 8 that may be in an incorrect position, and also the number of containers 8 in a stack of storage containers. In such examples, the processor may then also be provided with information regarding the location of an engagement point on the storage container 8, as well as information regarding adjacent storage containers 8 that may be stacked below or above the identified container. Alternatively, the processor may already have been provided information regarding the dimensions of a number of known storage containers 8, which may be applicable upon identification of a storage container 8 e.g. of a specific type. The processor may additionally comprise a memory which may be used to store known positions of storage containers 8 (e.g. storage containers that have been previously identified by the location sensor 48/processor), such that the engagement means 40 is able to be moved to a known position of a storage container 8.

The engagement means 40 may be shaped to receive a storage container 8 therein, or at least partially therein, for example so as to permit the engagement means 40 to engage the storage container 8. The engagement means 40 may be substantially C-shaped or U-shaped, for example when viewing the engagement means 40 in a plane lateral to the longitudinal axis 16. In other examples, the engagement means 40 may have other shapes, for example a J-shape configuration may be possible, e.g. in which one arm may be shorter than the other. The engagement means 40 may comprise a support frame 50. The support frame 50 may be substantially C-, U- or J- shaped.

The engagement means 40 may be moveable in a first and second lateral direction, the first and second lateral directions being opposite directions, and both being laterally disposed (e.g. perpendicular, substantially perpendicular, etc.) to longitudinal axis 16. The engagement means 40 may be moveable in a first lateral direction from a location inside the cavity 6 to a location external to the cavity 6, such that the engagement means 40 is at least partially located external to the cavity 6. The engagement means 40 may comprise one, or a plurality, of extendable arms 52. The extendable arms 52 may be the same length, although examples in which the extendable arms 52 have differing lengths are also conceivable. The extendable arms may be joined together, for example by an intermediate member, so as to form a C- or U- shape support frame 50. The extendable arms 52 may be moveable in a direction that extends laterally relative to the longitudinal axis 16. For example, the extendable arms 52 may be moveable in the first lateral direction and the second lateral direction. In the illustrated example, the engagement means 40 comprises two extendable arms 52, although it should be noted that examples of the device 2 may be conceivable having more or fewer than two extendable arms, for example, three or four extendable arms, for example if further support to a storage container 8 is desired. The extendable arms 52 may be locatable inside the cavity 6 (e.g. fully inside the cavity 6, or partially inside the cavity 6) and may be moveable from the cavity 6 to a location external to the cavity, or vice versa. The extendable arms 52 may be used to move an engaged storage container 8 in a lateral direction, for example to a location external to the cavity 6 from inside the cavity 6 (e.g. fully inside the cavity 6), or vice versa. Figure 4 illustrates an example of the engagement means 40 engaging a storage container 8 with the extendable arms 52 in an extended position, and the storage container 8 being located outside of the cavity 6, while Figure 3 (see also Figure 6) illustrates the extendable arms 52 in a retracted position, being located inside the cavity 6 (e.g. fully located inside the cavity 6).

The location sensor 48 may be moveable relative to the engagement means 40. In this example, the engagement means 40 defines a recess (here, located between the extendable arms 52) in which a storage container may be positioned and optionally engaged, and the location sensor 48 is positioned so as to be directed towards said recess, so as to be able to identify a storage container 8 in the recess. The location sensor 48 may be pivotable. For example, the location sensor 48 may be rotatable about an axis parallel, or substantially parallel, to the longitudinal axis 16. The location sensor 48 may be rotatable by and angle between 80 and 100 degrees, such as by 90 degrees. The location sensor 48 may be rotatable so as to be oriented towards a storage container 8 engaged by the extendable arms 52 retracted configuration, or in an extended position. As such, the location sensor 48 may be able to read information from a storage container 8 that has been received in the extendable arms 52 in the extended position, which may then be used to determine the action to be taken with the received storage container (e.g. whether to be held in the cavity 8, for example at the top, the bottom or in the middle of a stack of storage containers located in the cavity 6).

The container handling arrangement 12 may comprise a retrieval device 54 for retrieving an item from within a storage container 8. The engagement means 40 may comprise the retrieval device 54. The retrieval device 54 may be extendable into a storage container 8, and may comprise a picker tool for picking an item from within said storage container 8, so as to be able to move, or optionally reposition, said item. In the example shown in Figure 4, the retrieval device 54 is extendable from within the cavity 6 to a location external to the cavity 6, and vice versa. As such, the retrieval device 54 is able to be extended into a container 8 whether the container is located inside the cavity 6, or external to the cavity 6, as long as the container is within the reach of the retrieval device 54. The retrieval device 54 may be extendable independently of the extendable arms 52.

The secondary support 20 is also illustrated in Figure 4 and may be connected (e.g. mounted, attached, anchored) to the guide arrangement 14. One or a plurality (e.g. some or all) of the support members 22 of the secondary support 20 may be connected to the guide arrangement 14 via a bracket 44. The bracket 44 may be positioned above (e.g. on top of) or within the housing 5. In cases where the bracket 44 is positioned within the housing 5, the housing 5 may comprise an aperture or apertures to permit the secondary support 20 to protrude through the housing 5. Alternatively, one or a plurality of the support members 22 may be directly connected (e.g. attached, mounted, anchored etc.) to the guide arrangement 14 (e.g. a rail 18 of the guide arrangement). In such cases, the support members 22 may be directly connected to the guide arrangement 14 so as to be positioned above the housing 5 (e.g. directly above the housing 5), or the housing 5 may comprise an aperture, slot, recess or the like therein, so as to permit a support member 22 to extend therethrough. Where a plurality of support members 22 are directly connected to the guide arrangement 14, the housing 5 may comprise an aperture, slot, recess or the like for each support member 22 directly connected to the housing. In some examples, the housing 5 may provide support to one or a plurality of support members 22, for example by the one or the plurality of support members 22 abutting against a surface of the housing 5, such as an upper surface of the housing 5.

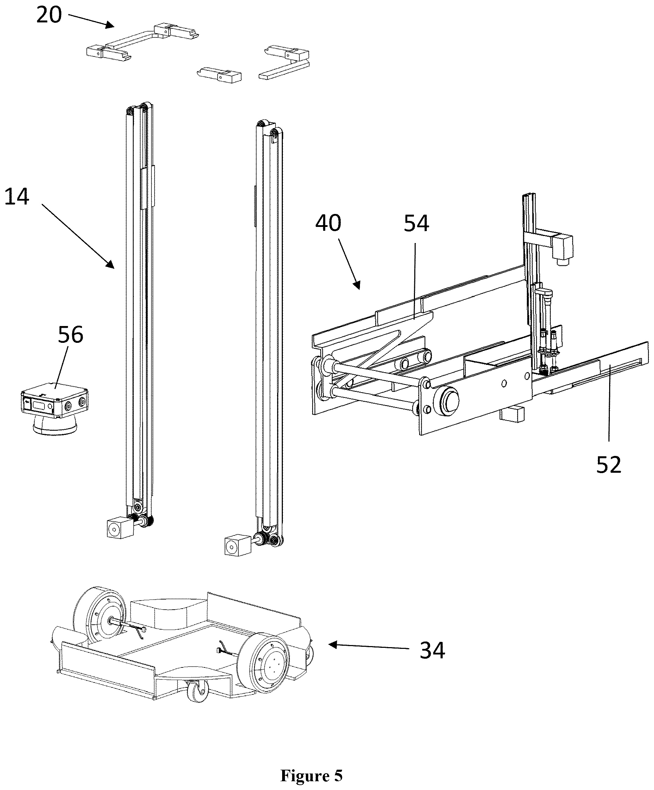

In Figure 5, the main body 4 of the handling device 2 is illustrated in an exploded view, to more clearly illustrate the parts thereof. Here, the guide arrangement 14, base 34, secondary support 20 and engagement means 40 are illustrated as separate parts. As previously described, the engagement means 40 comprises a retrieval device 54. In addition to the picker tool, the retrieval device 54 comprises a navigation sensor 56, which may be used to provide information in relation to the location of the engagement means 40 and/or the retrieval device 54, for example relative to the guide arrangement 14.

From Figure 5, and also Figure 4A, the modular nature of the handling device 2 is well illustrated. For example the housing 5, base 34, guide arrangement 14, engagement means 40, secondary support 20 and navigation sensor 56 may each individually be removed from the handling device 2 for replacement or repair. In use this may mean that, in cases where a component (or module) of the handling device 2 is damaged or needs replaced for some reason, only that specific module may require to be swapped, and there may be no need to replace the entire handling device 2, or send the entire device 2 for repair. The handling device 2 having a modular construction may additionally be more easily assembled than a non-modular device.

Figures 6 and 7 illustrate the engagement means 40 in greater detail. The extendable arms 52 of the engagement means 40 can be seen in particular in greater detail, and in this example comprise a first and a second U-, or C-, shaped frame 52a, 52b, (e.g. an inner and an outer frame), with the second frame being located within the first when the extendable arms 52 are in a retracted position. A belt drive is attached to the first frame 52a and comprises a belt supported on a plurality of wheels. The belt drive is in contact with the second frame 52b, for example an upper surface of the second frame 52b, such that the drive may be used to move the second frame 52b between a retracted position as shown in Figures 6 and 7 and an extended position, for example as shown in Figure 4. As illustrated in Figure 6, the location sensor 48 is mounted to the first frame 52a, which remains in the cavity 6 when the second frame 52b is in the extended position.

The container handling arrangement 12 may comprise a container contactor 58 or a plurality thereof. Here, the engagement means 40 comprises the container contactor 58. As illustrated, the second frame 52b comprises two container contactors 58, with one container contactor 58 being located on each of the extendable arms 52. In particular, the container contactors 58 are located on the second frame 52b of the extendable arms 52. The container contactors 58 may be configurable between an extended and a retracted position, with the container contactors 58 of Figure 6 being illustrated in the retracted position. With the container contactors 58 in the retracted position, the second frame 52b may be able to be located adjacent to a storage container 8 (e.g. located around a storage container 8, such as partially around a storage container 8) without engaging the storage container. As such, the second frame 52b may be dimensioned such that the arms thereof are positioned further apart than the width of a storage container 8. In the extended position, the container contactors 58 may be configurable to engage a storage container 8. For example, the container contactors 58 may be configurable to engage a ledge, protrusion, or the like of a storage container 8, such as a rim extending around the opening of a storage container 8. The container contactors 58, in the extended position, may be in the form of a ledge, lip, ridge or the like that extends from the second frame 52b, and additionally uses the weight of the storage container 8 to maintain an engagement therewith. As such, it may be possible to lift a container from engagement with a container contactor 58 without any resistance or, when an engaged container is placed on a surface, simply move the container contactor (e.g. via the engagement means 40) in a downwards direction to disengage the container contactor (and thereby the engagement means 40) from said storage container 8.

The retrieval device 54 is moveable between a retracted configuration and an extended configuration, wherein in the retracted configuration the retrieval device 54 is located inside the cavity 6 and retracted from a storage container, and in the extended configuration, the retrieval device 54, for example the picker tool 60 thereof, may be located inside a storage container and/or external to the cavity 6. In Figure 6, the retrieval device 54 is illustrated in a retracted configuration, while in Figure 7, the retrieval device 54 is illustrated in an extended configuration.

The retrieval device 54 comprises a first and a second extendable arm 62a, 62b, which may be considered to be telescopic arms. The picker tool 60 is connected (e.g. attached, mounted) to both of the first and second extendable arms 62a, 62b, for example may be connected to the first extendable arm 62a via the second extendable arm 62b. The first extendable arm 62a may be extendable in a direction that is lateral to (e.g. perpendicular to, substantially perpendicular to) the longitudinal axis 16 and the second extendable arm 62b may be extendable in a direction that is parallel to (e.g. aligned with, substantially parallel to) the longitudinal axis 16. The first extendable arm 62a is connected to the second extendable arm 62b via a pivotal connection, such that the second extendable arm 62b is rotatable relative to the first 62a. As such, the picker tool 60 is also rotatable about an axis perpendicular to the longitudinal axis 16 which may assist the picker tool 60 in gripping, engaging, etc. items in a storage container 8.

As shown, the retrieval device 54 is mounted to the extendable arms 52 (in particular, to the first extendable arm 52a) of the engagement means 40. The extendable arms 62a, 62b of the retrieval device 54 comprise, in this example, a plurality of arm sections that are slidably moveable relative to one another in the direction of the respective arm extension such that the arm 62a, 62b is able to be extended in a telescopic manner. As illustrated, the extendable arms 62a, 62b may be retractable (e.g. collapsible) so as to comprise a compact arrangement.

The retrieval device 54 may be slidably mounted to the extendable arms 52 of the engagement means 40. The retrieval device 54 may be slidably mounted so as to permit the movement of the retrieval device in a direction from one extendable arm 52 to the other e.g. perpendicular to the direction of extension of both the first and second extendable arms 62a, 62b of the retrieval device 54. As such, the picker tool 60 may be able to be moved in three dimensions, and in any desired direction. As illustrated in Figure 6 and Figure 7, the retrieval device 54 is slidably mounted to the extendable arms 52 via a bracket comprising an aperture that is slidable along a rail in the desired direction of motion.

In addition to a picker tool 60, the retrieval device 54 may additionally comprise a sensor 64 of the sensor arrangement 46. The sensor 64 may be, for example, an optical sensor, a magnetic sensor, an RFID reader, or the like, and may be used to assist in the control of the picker tool 60. For example the sensor 64 may be configurable to identify an item or items in a storage container 8, such that they are able to be "picked" by the picker tool 60. The sensor 64 may be in communication with a processor, which may be receive data from the sensor 64, and may send operational instructions to the sensor retrieval device 54 and/or the picker tool so as to control the movement of the picker tool 60 to pick a desired object.

The picker tool 60 may be any appropriate tool for picking an object in a storage container 8. For example, the picker tool 60 may be or comprise a suction cup, a magnet, a hook, a claw, a scooper or the like. In the example of Figures 6 and 7, the picker tool 60 is in the form of two suction cups.

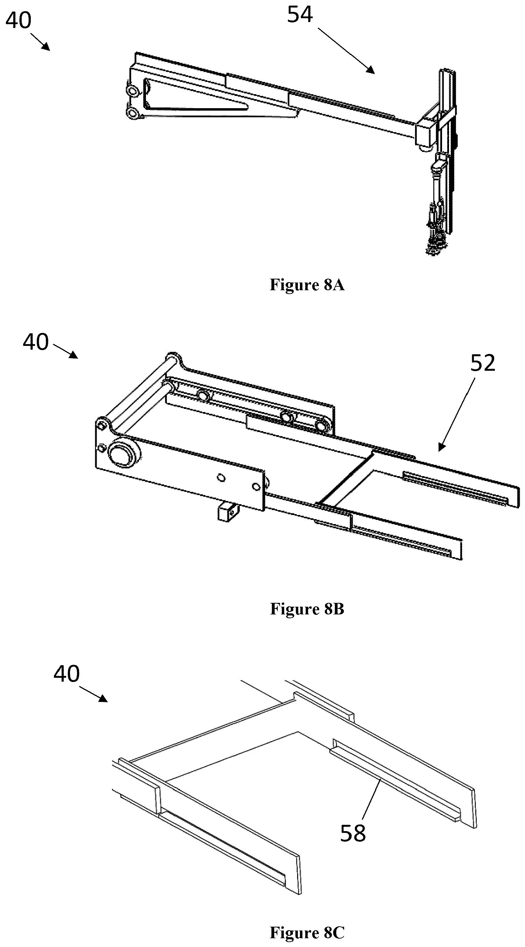

Figures 8A-C illustrate the engagement means 40, in this example including the retrieval device 54 in an exploded view for the illustration of more detail. Here, the extendable arms 52 of the engagement means 40 are shown in a fully extended position, while the container contactors 58 are also illustrated in an extended position, so as to be able to engage a storage container 8 positioned between the arms thereof.

### Handling Device Calibration

Before the handling device 2 is useable to manipulate a stack of containers, for example in a shop or warehouse, the handling device 2 may require to be calibrated. There is therefore also disclosed a method for setup and/or calibration of a handling device. The method for setup and/or calibration may comprise some or all of the following steps:
The method may comprise assembling the handling device 2, for example from modules as have been described in relation to the preceding figures, for example Figure 4. In particular, the method may comprise assembling the handling device 2 to include a control unit therein. The method may comprise assembling (e.g. mounting) the control unit in the housing 5.

The method may comprise mapping an operational area for the handling device 2, in which the handling device 2 may function. The operational area may be an indoor space such as a retail location such as a shop or warehouse. The details of the mapped operational area may be stored in the control unit. The details of the mapped operational area may include outer boundaries of the operational area, the location of objects such as shelving units, lockers, no-access zones, or the like. Where necessary, objects may be provided specific identification, for example shelving units, lockers or the like, may be assigned a number, which may be used to provide a handling device 2 information as to where to store/pick up an object in the operational area. In addition, specific paths or routes in and around the shop and/or warehouse may be saved in the control unit, which the handling device 2 may be able to use to assist in its navigation around the operational area.

The method may comprise calibrating the container handling arrangement 12 to a predetermined height or a plurality of predetermined heights, which may correspond to the height of a shelf or shelves on which a storage container may be located and/or placed. The method may comprise calibrating the engagement means 40 to a height or plurality of predetermined heights. The details of the height of plurality of predetermined heights may be stored in the control unit. Thus, when the handling device 2 is located at a particular shelving unit, the control unit may operate the container handling arrangement 12 to move the engagement means 40 in the first or second longitudinal direction to a predetermined height, at which access to a shelving unit or shelf may be possible.

The method may comprise confirming a particular calibration, for example on the user interface 21.

### Retrieval of Storage Container

The handling device 2 may be used to retrieve a container or a number of containers from a storage location (e.g. a shelf, locker, storage unit, or the like) within a shop or warehouse (e.g. an operational area). The method may be or comprise a method for retrieving a storage container from a storage location, e.g. to be engaged by the handling device 2.

Such a method of retrieving a storage container 8 may comprise the control unit receiving information regarding an item or storage container to be retrieved. The information may be retrieved in any appropriate way, such as via the user interface 21, or in some examples the handling device 2 may comprise a receiver for receiving information, e.g. signals such as wireless signals. The received information may comprise only details relating to the item or storage container to be retrieved, which may then be compared with a known location of said item or storage container in the operational area. Alternatively, the information may contain the location of the item or storage container to be retrieved. The location of the item or storage container may be or comprise details of the storage unit (e.g. the shelf or shelves, locker, or the like) and the height at which the storage container or item is located.

The method may comprise navigating the handling device 2 to a desired position, for example a position adjacent the item or storage container to be retrieved, for example adjacent a shelf or shelving unit on which the item to be retrieved is located. The method may comprise configuring the container handling arrangement 12 to be able to engage a container at a predetermined height. The method may comprise moving the engagement means 40 in the first or second longitudinal direction so as to move the engagement means 40 to a predetermined height, e.g. such that the engagement means 40 is at the height, or adjacent the height, of the item or storage container to be retrieved.

The method may comprise identifying an item or storage container to be retrieved. The method may comprise using the container handling arrangement 12 to identify an item or storage container to be retrieved, for example using the engagement means 40 to identify an item or storage container to be retrieved, for exampling using the location sensor 48 located on the engagement means 40 to identify an item or storage container to be retrieved. The method may comprise configuring the location sensor 48 to identify an item or storage container to be retrieved. Configuration of the location sensor 48 may involve rotating the location sensor 48, for example around an axis parallel to the longitudinal axis 16, such that the sensor is directed towards the item to be located. The location sensor 48 may be directed to the outside of the cavity 6 for this purpose, and may have been moved (e.g. by 90 degrees) from a configuration in which the location sensor 48 was directed into the cavity, for example directed towards an extendable arm 52 of the engagement means, and/or directed towards a recess provided in the engagement means 40 in which a storage container may be placed. Identification may take place before the item and/or storage container are engaged by the handling device 2. The step of identifying may comprise scanning an identifier, for example a bar code or QR code, located on the item or storage container.

The method may comprise confirming that the identified item or storage container is correct, for example by comparing information received from the location sensor 48 with information stored in the control unit. The method may comprise engaging the item or storage container in the container handling arrangement 12, for example the engagement means 40 of the container handling arrangement 12. The method may comprise extending the extendable arms 52 of the engagement means in the first lateral direction to engage the item or storage container, subsequent to the identification of said item or storage container. The method may comprise extending the engagement means 40 in the first lateral direction from inside the cavity 6 to outside the cavity 6, at least partially.

The method may comprise activating the container contactor 58 or contactors (e.g. configuring to the extended configuration) to engage a storage container, for example on opposing sides of the storage container. The method may comprise actuating the container contactor 58 or contactors via a drive means such as a motor. The method may comprise actuating the container contactor 58 subsequent to the engagement means 40 having been moved in the first lateral direction, to be located outside of the cavity 6.

The method may comprise moving the engagement means 40, with a storage container 8 engaged therein, in the first longitudinal direction (e.g. by an incremental amount) to lift the engaged storage container 8 from the shelf, locker, or the like on which it may be positioned or, in the case where the storage container is located on a stack of storage containers, to disengage the engaged storage container 8 from the stack of storage containers.

The method may comprise moving the engagement means 40, with a storage container engaged 8 therein, in the second longitudinal direction until the engagement means 40 and the engaged storage container 8 are located in the cavity 6 (e.g. fully in the cavity 6). The method may further comprise moving the engagement means in the second longitudinal direction to position the engaged storage container on the primary support 10 or, in the case where there is already a storage container 8 (or storage containers) located on the primary support 10, to position the engaged storage container 8 on the top of the storage container 8 or containers that are already supported by the primary support 10.

The method may comprise de-activating the container contactor 58 or contactors (e.g. configuring to the retracted configuration) to disengage a storage container. The method may comprise moving the engagement means 40 in the first longitudinal direction to the top of the stack of containers 9, or to a location above the stack of containers 9, and configuring the container contactor 58 to the extended configuration once again, and subsequently moving the engagement means 40 in the second direction so as to engage an upper surface of the uppermost storage container 8 in the stack 9 with the engagement means 40 (e.g. with a lower surface of the container contactor 58). As such, the engagement means by be used to stabilise a stack of storage containers positioned on the primary support 10 by providing a stabilising force in the second longitudinal direction at the top of a stack supported thereon.

### Placement of Storage Container

The handling device 2 may be used to place a container 8, or a stack thereof, in a desired location outside of the handling device 2. The method may be or comprise a method for placing a storage container or item in a desired location, such as on a shelf, locker, storage unit, ground surface, or the like.

The method may comprise navigating the handling device 2 to a desired position, for example a position adjacent a location for placement of a storage container or item, for example adjacent a shelf or shelving unit on which the item is to be placed.

The method may comprise providing a control unit with information regarding an item or storage container to be placed, and a location into which said item or storage container should be placed (similar as to has been described for "receiving a storage container").

The method may comprise identifying an item or storage container (or stack thereof) to be placed e.g. from a stack of storage containers supported e.g. by the primary support 10 of the handling device 2. The method may comprise using the container handling arrangement 12 to identify an item or storage container (or stack thereof) to be placed, for example using the engagement means 40 to identify an item or storage container to be placed, for exampling using the location sensor 48 located on the engagement means 40 to identify an item or storage container to be placed. The method may comprise configuring the location sensor 48 to identify an item or storage container (or stack thereof) to be placed. Configuration of the location sensor 48 may involve rotating the location sensor 48, for example around an axis parallel to the longitudinal axis 16, such that the sensor is directed towards the item to be placed. The location sensor 48 may be directed into the cavity 6 for this purpose, and may have been moved (e.g. by 90 degrees) from a configuration in which the location sensor 48 was directed outside of the cavity 6. Identification may take place before the item and/or storage container are engaged by the handling device 2. The step of identifying may comprise scanning an identifier, for example a bar code, a QR code, an RFID tag, or the like, located on the item or storage container.

The method may comprise confirming that the identified item or storage container (or stack thereof) is correct, for example by comparing information received from the location sensor 48 with information stored in the control unit. The method may comprise engaging the item or storage container in the container handling arrangement 12, for example via the engagement means 40 of the container handling arrangement 12. Where a stack of storage containers is to be engaged, the method may comprise engaging the lowermost storage container in the stack. The method may comprise activating the container contactor 58 or contactors (e.g. configuring to the extended configuration) to engage a storage container, for example on opposing sides of the storage container. The method may comprise actuating the container contactor 58 or contactors via a drive means such as a motor.

The method may comprise subsequently moving the engagement means 40, with a storage container 8 engaged therein, in the first longitudinal direction (e.g. by an incremental amount) to lift the engaged storage container 8 (or stack thereof) from the storage container or stack thereof on which is located.

The method may comprise checking that a location (e.g. storage space, shelf, locker etc.) is vacant before placement of a storage container. The method may comprise using the location sensor 48 located on the engagement means 40 to identify whether the location is free or empty. The method may comprise rotating the location sensor 48 to identify whether a location is free or empty, for example rotating a location sensor 48 to face said location, for example rotating the location sensor 48 90 degrees to face said location.

Subsequent to confirming that the location is vacant, the method may comprise placing a storage container in said location. The method may comprise extending the engagement means 40 towards the location in the first lateral direction, and moving the container contactor 58 to the retracted position to disengage the storage container. The method may comprise moving the engagement means in the second lateral direction, back into the cavity 6.

### Handling of Storage Containers

A method for handling a stack of containers 9 will now be described, diagrammatically presented in Figure 9.

In Figure 9, a sequence of steps is illustrated for handling a stack of containers 9 located in the cavity of the device 2, so as to access a container 8 in the middle of a stack of containers 9. The sequence illustrates a method for handling a stack of a plurality of storage containers 9. For ease of understanding, the sequence has been divided into six individual illustrations.

In the first illustration of Figure 9, i.e. the leftmost illustration, the method comprises supporting a vertical stack of a plurality of containers 9 on the primary support 10 and inside the cavity 6 of the main body 4 of the automated container handling device 2. In this example the vertical stack of a plurality of storage containers 9 comprises five storage containers, although it should be noted that the stack of containers 9 may comprise more or fewer storage containers. In this example, the entire stack of containers 9 is contained within the cavity. However in other examples, such as examples in which there are more than five storage containers in the stack, the stack of containers 9 may protrude or extend from the cavity 6. All the containers in the stack of storage containers 9 may be identical (e.g. identically dimensioned) or the containers may have differing dimensions, for example differing heights, but identical lengths and widths, such that storage containers 8 are able to be stacked.

With the stack of storage containers 9 positioned in the cavity 6 and supported on the primary support 10, the secondary support 20 may be in the passive configuration, as is shown in the first illustration of Figure 9. In this example, the secondary support 20 is disposed in the longitudinal direction at a midpoint between the upper and lower end points of motion of the engagement means 40, which may be defined by the ends of the guide rail 18 of the guide arrangement 14, as previously described. With the secondary support 20 in the passive configuration, there is no engagement between the secondary support and the stack of storage containers 9, regardless of the height of the stack of storage containers 9, for example even if a storage container is disposed adjacent to the secondary support 20 (e.g. longitudinally disposed at the same height, or midpoint, as the secondary support 20). As such, the secondary support 20 in the passive configuration will not interfere with movement of the stack of storage containers 9 in the first or second directions (e.g. in the longitudinal direction).

The method comprises positioning and/or providing a container handling arrangement 12 in the cavity (e.g. fully or partially within the cavity). In Figure 9, the engagement means 40 is partially visible, while the drive unit is obscured by the housing 5. The container handling arrangement 12 may then be used to assist in the handling of the stack of storage containers 9 positioned in the cavity 6, as will be described.

When it is desired to access a container 8, the container handling arrangement 12 is operated. In particular, the engagement means 40 is moved in either or both of the first and second longitudinal directions so as to be adjacent (e.g. longitudinally disposed at the same height) to the desired storage container 8. In some examples, the method may comprise identifying the containers in the stack of containers 9, such as through use of the sensor arrangement 46 to scan an identifier (e.g. a barcode or QR code, an RFID tag, or the like) on each of the containers of the stack 9. The method may comprise identifying the number and/or contents of each container in the stack 9. The identification of the containers in the stack 9 may take place prior to the engagement of a container (e.g. a desired container) with the engagement means 40.

The method comprises engaging at least one storage container of the stack 9 supported on the primary support 10 via the engagement means 40. As described and illustrated in relation to Figures 8A-C, for example, the engagement means comprises a container contactor 58, and the method may comprise configuring the container contactor 58 to the extended configuration from the retracted configuration (e.g. by rotating the container contactor 58 by 90 degrees). With the container contactor 58 in the retracted configuration, the engagement means 40 may be moveable in the first and second longitudinal directions without interference from (e.g. without engaging) a container 8 or a stack of containers 9 located in the cavity 6. The method may comprise configuring the container contactor 58 to the extended configuration once the engagement means 40 has been moved so as to be adjacent a desired storage container 8 to access.

The method may comprise engaging a desired storage container 8 with the container contactor 58 at an engagement profile provided on the storage container 8. As illustrated in the example of Figure 9, the engagement profile may be or comprise a rim that extends around the opening of the storage container 8, although other possibilities exist for engagement, such as the storage container comprising a recess into which the container contactor 58.

Once a desired storage container 8 has been engaged by the engagement means 40, the engagement means 40 may be moved in the first longitudinal direction so as to lift the desired container 8, as well as any containers stacked on top thereof, as is shown in the second illustration of Figure 9 to a holding position. The engagement means 40 is moved by operating the drive unit 38, or drive units in the case where there are more than one. In this example the drive unit 38 or drive units may be configured for use with a hoist, as has been previously described. The desired container 8 may then be lifted (e.g. moved in the first longitudinal direction) until the container directly above the desired container 8 in the stack of containers 9 is adjacent the secondary support 20. The container directly above the desired container 8 may be lifted until an engagement profile is located above the secondary support 20, and an engagement profile of the desired container 8 is located below the secondary support 20, this may be considered to be the holding position, or a position above (e,g. adjacent and above) the holding position. During this step, the secondary support 20 may continue to be in the passive configuration.

With the container above the desired container 8 in the described position the secondary support 20 may be configured to the active configuration. In this example, the support members 22 of the secondary support 20 are in the form of fingers that are rotatable about an axis, and configuration between the active and passive configuration may comprise rotating the support members 22 by 90 degrees. In the active configuration, the secondary support 20 may be configured to engage a storage container, such as an engagement profile of a storage container. The configuration of the secondary support 20 to the active configuration is shown in the third illustration of Figure 9.

Once the secondary support 20 has been configured to the active configuration, the method may comprise moving the engagement means 40 in the second longitudinal direction (e.g. lowering the engagement means 40), so as to lower the container directly above the desired container 8 into engagement with the secondary support 20 (e.g. and into the holding position), as is shown in the fourth illustration of Figure 9. The method may comprise moving the engagement means 40 further in the second longitudinal direction so as to separate the desired container 8 from the stack of containers 9, as is shown in the fifth illustration of Figure 9. Once the desired container 8 has been separated from the stack of containers 9, the engagement means 40 may be moved in the first lateral direction, so as to move the desired container 8 to a location external to the cavity 6, for example where it may be easily accessed by a user, or by a device, for example a second mobile automated container handling device, a mobile automated container transport device, placed on a surface, in a locker, on a shelf, or the like.

With the desired container 8 now placed external to the cavity, the engagement means 40 may be moved in the second lateral direction and back into the cavity 6, e.g. fully into the cavity 6. Once in the cavity 6, the engagement means 40 may then be moved in the second longitudinal direction to engage the storage container that was positioned below the desired container 8 in the stack of containers 9. The method therefore comprises subsequently engaging said container (by extending the container contactor 58), which is supported on the primary support 10. Said container is then moved in the first longitudinal direction so as to come into contact with the stack of containers supported by the secondary support 20, and move (e.g. lift) the stack of containers out of engagement with the secondary support 20. The secondary support 20 is then configured to the passive configuration and the stack of containers engaged by the engagement means 40 may be moved in the second direction, and placed back on the primary support 10, or in case a container or containers are located on the primary support 10, on the uppermost container that is located on the primary support 10.

The method may therefore comprise accessing a container in the middle of a stack of storage containers without removing the storage containers from the device 2 (e.g. without removing the remainder of the storage containers from the device 2, for example from being supported by the primary or secondary support 10, 20 or from being engaged by the engagement means 40).

The handling device 2 may be similarly operated in order to access a desired container directly supported by the primary support 10, e.g. on the bottom of stack of containers 9. In such an example, the steps may be as shown in the first two illustrations in Figure 9. However, rather than the engagement means 40 engaging and lifting the desired container 8, the engagement means 40 may engage and lift the container located directly above the desired container 8, as well as any other containers stacked thereon. The engagement means 40 may then lift the engaged container and any containers stacked thereon. The engaged container and the containers stacked thereon may then be moved in the first lateral direction and out of the cavity 6 (e.g. fully out of the cavity 6) and may be lowered (by moving the second longitudinal direction) onto a free space, for example a space on the surface on which the handling device 2 is located such as the floor or ground. Once positioned in this free space, the engaged container and any containers positioned thereon may be disengaged by the engagement means, for example by moving the container contactor 58 to the retracted configuration, and the engagement means 40 moved in the second lateral direction back into the cavity 6. The engagement means 40 may then be moved in the second longitudinal direction to engage the container supported on the primary support 10. The handling device 2 may subsequently be moved adjacent a desired placement location of the storage container, and the container moved in the first longitudinal and lateral directions as necessary to place the storage containers in the desired location, such as in a locker, shelf or the like. Further, the handling device 2 may then navigate back to the remaining stack of storage containers to engage the lowermost container thereof, and lift said container back into the cavity 6.

The handling device 2 may be operated to access a desired container 8 located on the top of a stack, simply by moving the engagement means 40 to the height of the top container, and engaging and lifting the top container (e.g. moving the top container in the first longitudinal direction). The desired container 8 may then be moved in the first lateral direction if desired, for example to place the desired container 8 on a shelf, in a locker, in a storage container or the like.

Although not illustrated in Figure 9, the handling device 2 may be in communication (e.g. wireless communication) with a central processing system. The handling device 2 may comprise a transmitter and a receiver for the purpose of communication with the central processing system. The central processing system may communicate with the control unit of the handling device 2. The central processing system may be used to send instructions to the handling device 2 (e.g. that a storage container 8 is required, which may be located in a stack in the cavity 6), or that the handling device 2 is required in a particular area of the shop or warehouse. The central processing system may perform inventory management functions, such as keeping a log of the inventory in a shop or warehouse, and providing instructions to a handling device 2 or devices to retrieve and/or replenish inventory in the shop or warehouse.

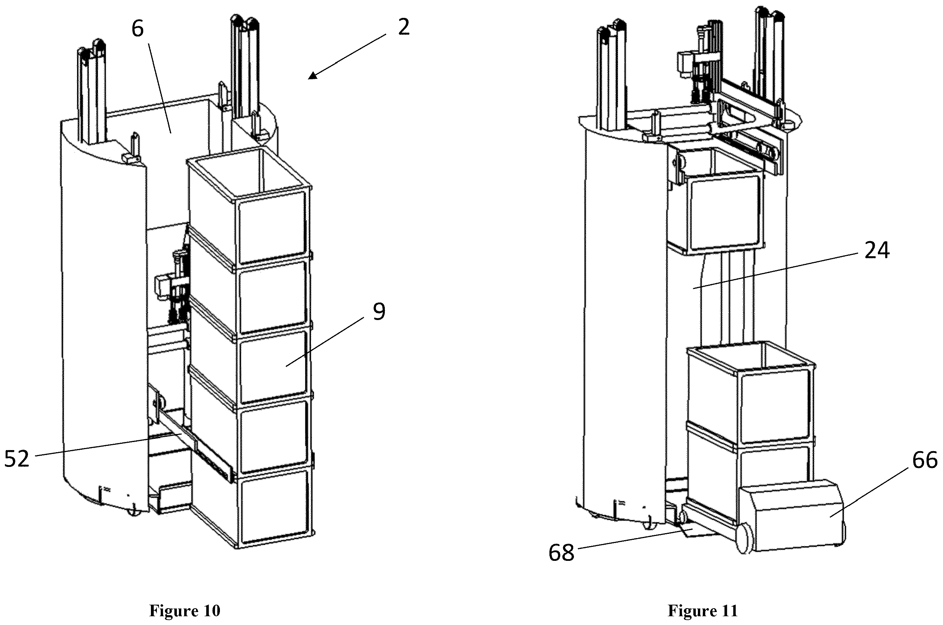

In Figure 10 there is illustrated an example of the handling device 2 with the extendable arms 52 extended and the container contactor 58 in the extended position so as to engage the lowermost container of a stack of containers 9. The engagement means 40 may then be used to move the stack of containers 9 in the second lateral direction to bring the stack of containers 9 from an external location into the cavity 6. Although here there are 5 containers shown in the stack 9, it should be noted that the stack 9 is not limited to containing 5 containers, and may comprise fewer or more containers.

Figure 11 illustrates the operation of the handling device 2 in combination with a secondary device 66, and illustrates cooperation therebetween. The secondary device 66 may be a mobile automated container transport device, as is illustrated in Figure 11. In this case, the secondary device 66 may be used in combination with the handling device 2, for example as a way to bring a container or a stack of containers to the handling device 2, which may then be passed to the handling device 2, for example to be engaged by the engagement means 40 (e.g. via the extendable arms 52). Alternatively or additionally, the secondary device 66 may be used in the same location (e.g. the same shop, warehouse, or the like) as the handling device 2, and may perform other functions that do not involve the handling device 2. The handling device 2 may be configured, as shown in Figure 11, to allow the secondary device passage through the handling device 2. As such, the handling device 2 may be able to be used in environments in which space is limited, for example in narrow aisles in a shop, since a secondary device 66 is able to travel "through" the handling device 2, rather than have to navigate around the handling device 2, but operational efficiency is not affected.

In the example illustrated in Figure 11, the secondary device 66 is able to pass (e.g. drive) through the through-passage 24 of the handling device 2. To permit passage of the secondary device 66 through the through-passage 24, the container handling arrangement 12 is configurable between a lowered position in which the stack of containers blocks the through-passage 24 and a raised position, in which the through-passage 24 is open such that a container is able to pass therethrough. In Figure 11, the container handling arrangement 12 is in the raised position, and the through-passage is sufficiently large such that a secondary device 66 can pass through alone (e.g. without any storage containers thereon) or with a plurality of storage containers stacked thereon (in this example two storage containers). To facilitate passage of the secondary device 66 through the through-passage, the base 34 comprises a ramp 68 at the entry and exit of the through passage 24 (e.g. a pair of ramps). The entry and exit of the through-passage 24 may switch depending on the direction in which the secondary device 66 is travelling. The ramp 68 or ramps may be configurable between a raised and a lowered position, which may assist to allow a secondary device 66 access to the through-passage 24 in the lowered position, and in some examples may assist to secure a vertical stack of storage containers on the primary support 10, which in this case is a base plate. The ramps 68 may raise and lower simultaneously, for example may lower when passage of a secondary device 66 through the through-passage 24 is desired.

It should be noted that, while the primary support 10 illustrated here is a base plate which may require, or benefit from, the use of a ramp 68, other examples may exist in which no ramp is necessary. For example, in cases where the primary support 10 comprises a frame or frames, the through-passage 24 may be traversed without the secondary device 66 having break contact with the surface on which both the secondary device 66 and the handling device 2 are located.

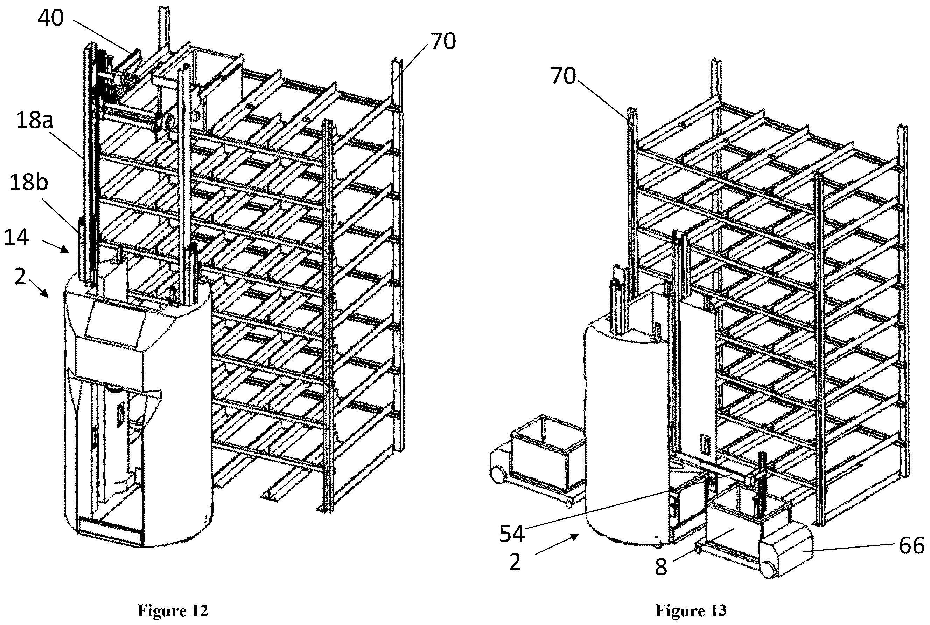

Figures 12 and 13 illustrate a use of the handling device 2 next to a shelving unit 70. In this example, the shelving unit 70 is suitable for storing a number of storage containers 8 thereon, and may be specifically adapted to store storage containers 8 thereon, although the skilled reader will understand that this need not necessarily be the case.

In Figure 12, the container handling arrangement 12 of the handling device 2 is being used to engage a storage container 8, for example to place the storage container 8 on the shelving unit 70, or perhaps to retrieve the storage container 8 from the shelving unit 70, for example so as to lift the storage container 8 into the cavity 6 of the handling device 2 by retracting the extendable arms 52 of the container handling arrangement 12, and lowering the container 8 into the cavity 6. In this example, the storage container 8 is positioned on the shelving unit 70 at a height that is higher than the upper end point of the range of motion of the engagement means 40 during normal operation of the handling device 2 (e.g. with the handing device 2 having the configuration as illustrated in Figure 9, for example).

In this example, the guide arrangement 14 (e.g. the guide rails 18 of the guide arrangement 14) is telescopically extendable. The telescopically extendable guide arrangement 14 functions to increase the height at which a handling device 2 is able to engage a container 8, and may assist users of the device to increase capacity of shops and warehouses by permitting storage containers to be stored and accessed by the handling device 2 at a wide range of heights. It should also be noted that the lower end point of the range of motion of the engagement means 40 is at the height, or slightly above, the height of the surface on which the handling device 2 is supported, meaning that the handing device 2 is able to access storage containers using the container handling arrangement 12 through the entire height, or substantially the entire height, of the device.

As illustrated in Figure 12, the guide rails 18 of the guide arrangement 14 may comprise primary and secondary rails 18a, 18b. The primary rail 18a may be mounted to the secondary rail 18b, for example in a similar way as the container handling arrangement 12 is mounted to the guide arrangement 14. The secondary rail 18b may comprise a hoist, or hoist mechanism, which may be used to move the primary rail 18a, for example in the first and second longitudinal directions. As previously described, the first rail 18a may be used to mount the container handling arrangement 12 to the guide arrangement 14. The guide arrangement 14 may therefore be telescopic in that the secondary rail 18b is able to move the primary rail longitudinally, as is illustrated in Figure 12.

With the primary rail 18a in the non-extended position, the guide arrangement 14 may permit movement of the engagement means 40 through a first range of motion, which may be contained within the cavity 6, and may extend between the upper and lower end point of the primary rail 18a. However, when the primary rail 18a is in an extended configuration, the engagement means 40 may be considered to extend (e.g. move) through a second range of motion, which extends external to the cavity 6, and may extend between the upper and lower end point of the primary rail 18a, which may be raised in comparison to when the primary rail 18a is in the non-extended position. The second range of motion may therefore be variable depending on the height of the primary rail 18a.

### Item Sorting

In Figure 13, there is illustrated an example of the handling device 2 cooperating with a secondary device 66, or possibly both devices 66 that are illustrated in Figure 13. Here the handling device 2 is shown accessing a storage container 8 (e.g. accessing an interior volume of a storage container) that is located external to the cavity 6. Here, the storage container 8 is located on a transport device 66, although the skilled reader will understand that the storage container 8 may have an alternative location, such as on a ground surface, on a shelf, another handling device 2, engaged in the engagement means 40, or the like. As is illustrated, the retrieval device 54 may be used to access the interior of a storage container, and optionally to sort items therein. The described method may therefore comprise engaging (e.g. supporting) a storage container 8 with second handling device 2 while accessing the interior of said storage container 8 with a first handling device 2.

Described is also a method of sorting items into a storage container. The method may be used, for example, to provide a storage container with a predetermined desired number and type of items, for example for fulfilling an order for a specific number and type of items. Such a method may be performed in combination with the retrieval device sensor 64, which may be an optical sensor such as a camera. Optionally, the method may be performed without the retrieval device sensor 64. The method for sorting items into a storage container may generally be described as follows.

The control unit may receive an instruction for an order in any appropriate way, for example as has already been described in relation to previous examples. The instructions may comprise a number and/or type of items to be sorted into a single or multiple "receiver" storage container or containers, and may optionally include an indication of where said items are located in a shop, warehouse, etc.

On receiving the instructions, the control unit may operate the drive wheels 36 to move the handling device 2 to a location adjacent a "supplier" storage container (e.g. located on a shelf, in a locker, in a stack of storage containers, or the like) containing at least one item to be sorted into the "receiver" container. Where multiple items are to be sorted into the "receiver" container, the method may comprise navigating to the storage container that is closest to the handling device 2. The handling device 2 may engage the "supplier" storage container with the extendable arms 52 in the extended position, and move the "supplier" storage container with the arms 52 in the extended position so that it is level with the uppermost container supported by the primary support 10. Alternatively and as is shown in Figure 13, the "supplier" storage container may be positioned on a secondary device 66, or in another location such as a stand, shelf, on the floor/ground, or the like. The "receiver" container is positioned so as to be the uppermost container that is supported on the primary support 10, and the method comprises providing an empty container as the "receiver" container.

Where the retrieval device sensor 64 is being used, the method comprises generating an image of the interior of the "supplier" storage container from which items are being sorted, for example by taking a picture of the internal contents of the storage container with the retrieval device sensor 64. The generated image may then be used to identify individual items stored in the "supplier" storage container, thus facilitating accurate picking by the picker tool 60. The picker tool 60 may then be moved into the "supplier" storage container, for example in the second longitudinal direction, so as to "pick" (e.g. engage, grip, etc.) an item from within the storage container. The picked item may then be moved in the first longitudinal direction out of the "supplier" storage container. The method may comprise moving the item in the second lateral direction into the cavity 6, and into the "receiver" container. Should further items be required to be picked, then this step may be repeated as many times as possible by moving the picker tool in the first and second lateral direction on the first extendable arm 62a between the two storage containers. Once no more items are left to be picked from the "supplier" storage container, the storage container may be repositioned back in a storage unit, such as a shelf or locker. The handling device 2 may then, if necessary, navigate to a second "supplier" container (which may be the next closest "supplier" storage container) and repeat the described process. Should the first "supplier" container not contain enough of the desired item, then the handling device 2 may navigate to a second "supplier" container that does still contain a quantity of the desired item.

The described process may also be completed without the use of the retrieval device sensor 64. While use of the retrieval device sensor 64 may provide accurate picking of items, performing the method without the retrieval device sensor 64 may enable faster picking of items. Where the process is completed without the retrieval device sensor, the control unit may use a sorting algorithm (which may be stored in the control unit, for example, or may be externally loaded into the control unit) that provides the handling device 2 with a "memory" of the location of the items to be picked. This method may comprise picking items from a "supplier" storage container in a pre-set pattern, moving the picker tool 60 to a location where it is known that the desired item will be located in the "supplier" storage container.

As described in relation to Figure 13, the "supplier" storage container may be engaged by a second handling device 2. The method may comprise sending a signal from a first handling device 2, for example via a signal transmitter, and receiving said signal at a second handling device 2, for example via a receiver. The second handling device 2 may navigate to a suitable location relative to the first handing device 2 such that the retrieval device 54 of the first handling device 2 may access the interior of a "supply" storage container that is engaged by the second handling device 2, for example the engagement means 40 of the second handling device 2 optionally with the extendable arms 52 thereof in the extended position. The method may comprise using the second handling device 2 to engage and position the "supplier" container adjacent to the "receiver" container of the first handling device 2. The picker tool 60 may then be used to transfer items from the "supplier" container to the "receiver" container as has been described.

In the case where a shop or warehouse comprises an operational area comprising more than one handling device 2, the handling devices may be able to communicate with one another, for example through the use of transmitters and receivers. Each handling device 2 may therefore comprise a transmitter and a receiver. The handling devices 2 may be able to communicate with each other to maximise the available space in the operational area, for example by identifying handling devices 2 having spare capacity, and instructing said devices 2 to engage and store storage containers 8 in the cavity 6 thereof temporarily.

It should be noted that, while the invention has been described with reference to a number of Figures, features and language used to describe one figure may equally be applicable to another of the Figures. Features and language used to describe one example may also be applicable to other described examples.

## Claims

1. A mobile automated container handling device, comprising:
a main body defining a cavity for locating a vertical stack of a plurality of storage containers therein, the main body comprising a primary support for supporting a stack of a plurality of storage containers thereon inside the cavity;
a container handling arrangement positioned in the cavity and comprising a drive unit and engagement means, the drive unit being configured to move the engagement means within the cavity and the engagement means being configurable to engage at least one storage container of a stack of a plurality of storage containers;
a secondary support configurable between an active and a passive configuration; and
a drive arrangement for moving the main body relative to a support surface on which the mobile automated container handling device is located;
wherein the container handling arrangement is configurable to engage, via the engagement means, at least one storage container of a stack of storage containers supported by the primary support and move the engagement means and the engaged at least one storage container to a holding position; and
wherein the secondary support is configurable to the active configuration to engage a storage container of the at least one storage container engaged by the engagement means in the holding position, and configurable to the passive configuration in which the secondary support is disengaged from the at least one storage container.

2. The automated container handling device of claim 1, wherein the engagement means is configurable to engage at least two storage containers of a stack of a plurality of storage containers located inside the cavity, and
wherein the secondary support is configurable to the active configuration to engage a storage container of the at least two storage containers engaged by the engagement means in the holding position, such that the engagement means is in contact with a first of the at least two storage containers, and the secondary support is in contact with a second of the at least two containers.

3. The automated container handling device of claim 2, wherein the secondary support engages a storage container of the at least two storage containers engaged by the engagement means in the holding position such that the engagement means is in contact with a first of the at least two storage containers, and the secondary support is in contact with a second of the at least two containers.

4. The automated container handling device of claim 2 or 3, wherein the second of the at least two containers is positioned directly upon the first of the at least two containers.

5. The automated container handling device of any preceding claim, wherein the primary support is fixed relative to the main body.

6. The automated container handling device of any preceding claim, wherein the main body defines a through-passage for permitting passage of a storage container therethrough, and the container handling arrangement is configurable to move an engaged stack of a plurality of storage containers between:
a lowered position in which the stack of a plurality of storage containers is supported by the support and positioned in the through-passage such that passage of a storage container through the through-passage is prevented; and
a raised position in which the stack of a plurality of storage containers is moved from the support so as to permit passage of a storage container through the through-passage.

7. The automated container handling device of any preceding claim, wherein the main body comprises an outer housing and a guide arrangement extending parallel to a longitudinal axis of the outer housing, the container handling arrangement being mounted to the guide arrangement to permit movement of the engagement means through a first range of motion that is parallel to the longitudinal axis of the outer housing and contained within the outer housing.

8. The automated container handling device of claims 5 and 6, wherein both the raised and the lowered position are contained within the first range of motion.

9. The automated container handling device of claim 6, wherein the guide arrangement extends external to the cavity and the drive unit is configured to move the engagement means through a second range of motion that extends external to the cavity.

10. The automated container handling device of claim 8, wherein the guide arrangement comprises a telescopic portion configurable to extend a length of the guide arrangement and to extend the second range of motion.

11. The automated container handling device of claim 6, wherein the primary support comprises a base-plate and a first and second ramp, the first ramp permitting passage of a container onto the base plate and into the through-passage and the second ramp permitting passage of a container from the base plate and out of the through-passage.

12. The automated container handling device of claim 6, wherein the through-passage permits the passage of a vertical stack of a plurality of storage containers therethrough.

13. The automated container handling device of any preceding claim, wherein the engagement means is configurable to move in a first longitudinal direction and a second longitudinal direction relative to the main body, the second longitudinal direction being opposite the first longitudinal direction, and the engagement means is additionally configurable to move in a first lateral direction, the first lateral direction extending laterally relative to the first and second longitudinal directions, and a second lateral direction, the second lateral direction being opposite the first lateral direction.

14. The automated container handling device of claim 13, wherein the engagement means comprises an extendable arm, moveable in the first and second lateral directions and extendable external to the cavity.

15. The automated container handling device of any preceding claim, wherein the engagement means comprises a container contactor configurable between an extended position in which the contactor is configurable to engage a surface of a storage container and a retracted position in which the contactor is disposed at a distance from said surface of a storage container.

16. The automated container handling device of any preceding claim, wherein the container handling arrangement comprises a sensor arrangement.

17. The automated container handling device of claim 16, wherein the sensor arrangement is configured to detect container-content information, and the container handling arrangement further comprises a retrieval device for retrieving an item from within a storage container, the item being identifiable from the container-content information.

18. The automated container handling device of claim 17, wherein the retrieval device comprises an item picker mounted to a telescopic arm.

19. The automated container handling device of claim 18, wherein telescopic arm and the item picker mounted thereto are extendable outside of the cavity.

20. The automated container handling device of any of claims 16 to 19, wherein the sensor arrangement comprises an optical sensor configured to detect container-content information.

21. The automated container handling device of any of claims 16 to 20, wherein the sensor arrangement is configured to identify a location of an individual storage container from a vertical stack of a plurality of storage containers.

22. The automated container handling device of any preceding claim, comprising a processing unit for controlling the container handling arrangement and the configuration of the secondary support.

23. A method for handling a stack of a plurality of storage containers, comprising:
supporting a vertical stack of a plurality of storage containers on a primary support and inside a cavity of a main body of an automated container handling device;
positioning a container handling arrangement in the cavity, the container handling arrangement comprising an engagement means and a drive unit;
engaging at least one storage container of the stack of a plurality of storage containers supported on the primary support with the engagement means;
operating the drive unit to move the engagement means and the at least one engaged storage container to a holding position;
configuring a secondary support from a passive configuration to an active configuration to engage a storage container of the at least one engaged storage container in the holding position.

24. The method of claim 23, comprising:
engaging at least two storage containers of the stack of plurality of storage containers supported on the primary support with the engagement means;
operating the drive unit to move the engagement means and the at least two engaged storage containers to a holding position;
configuring the secondary support from a passive configuration to an active configuration;
engaging a storage container of the at least two storage containers with the secondary support by configuring the secondary support from the passive configuration to the active configuration such that the engagement means is in contact with a first of the at least two storage containers and the secondary support is in contact with a second of the at least two storage containers.

25. The method of claim 23 or 24, comprising moving the engagement means in a first longitudinal direction to the holding position, and in a second longitudinal direction subsequent to configuring the secondary support to the active configuration, the second longitudinal direction being opposite the first longitudinal direction.

26. The method of claim 24 and 25, comprising moving the engagement means in the second longitudinal direction subsequent to configuring the secondary support to the active configuration to separate the storage container in contact with the secondary support from the storage container in contact with the engagement means.

27. The method of claim 25 and any other of claims 22 to 26, comprising engaging the uppermost container of the stack of a plurality of storage containers with the engagement means,
operating the drive unit to move the engagement means and the engaged uppermost container in a first lateral direction to a location external to the cavity, the first lateral direction extending laterally relative to the first longitudinal direction;
operating the drive unit to move the engagement means in the second longitudinal direction to position the uppermost container in a storage location external to the cavity;
disengaging the engagement means from the uppermost container; and
operating the drive unit to move the engagement means in a second lateral direction and into the cavity, the second lateral direction being opposite the first lateral direction.

28. The method of any of claims 23 to 27, comprising:
engaging, with the engagement means, the plurality of storage containers positioned directly upon the lowermost storage container of the vertical stack;
operating the drive unit to move the engagement means and the engaged plurality of storage containers in a first lateral direction to a location external to the cavity, the first lateral direction extending laterally relative to the first longitudinal direction;
operating the drive unit to move the engagement means in a second longitudinal direction, the second direction being opposite the first longitudinal direction, to position the engaged plurality of storage containers in a first storage location external to the cavity;
disengaging the engagement means from the engaged plurality of storage containers;
operating the drive unit to move the engagement means in a second lateral direction into the cavity, the second lateral direction being opposite the first lateral direction.

29. The method of claim 28, further comprising
engaging, with the engagement means, the lowermost storage container;
operating the drive unit to move the engagement means in the first lateral direction to a location external to the cavity to position the lowermost storage container in a second storage location;
disengaging the engagement means from the lowermost storage container;
engaging, with the engagement means, the plurality of storage containers;
operating the drive unit to move the engagement means and engaged plurality of storage containers in the second lateral direction into the cavity;
positioning the plurality of storage containers on the primary support.

30. The method of any of claims 27 to 29, wherein said storage location is an engagement means of an automated container handling device, or a support surface of a secondary container handling device.

31. The method of any of claims 24 to 30, comprising:
engaging, with the engagement means, the vertical stack of storage containers positioned on the primary support;
operating the drive unit to move the engagement means and the engaged vertical stack of storage containers to a raised position in which passage of a storage container through a through-passage in the main body is permitted;
passing a storage container through the through-passage in the main body.

32. The method of any of claims 23 to 31, comprising:
providing a guide arrangement mounted to an outer housing of the main body and extending parallel to a longitudinal axis of the outer housing;
mounting the container handling arrangement to the guide arrangement;
operating the drive unit to move the engagement means through a first range of motion parallel to the longitudinal axis and contained within the outer housing.

33. The method of any of claims 23 to 32, comprising:
telescopically extending a length of the guide arrangement external to the cavity to provide a second range of motion extending external to the cavity.

34. The method of any of claims 23 to 33, comprising:
providing the engagement means with a container contactor;
configuring the container contactor from a retracted position to an extended position in which the contactor is configurable to engage a surface of a storage container;
engaging the container contactor with the uppermost storage container in the vertical stack of storage containers so as to stabilise the vertical stack of storage containers.
